# EUROPÄISCHE PATENTANMELDUNG

(11) **EP 1 281 608 A2**
(43) Veröffentlichungstag der Anmeldung: **05.02.2003**
(21) Anmeldenummer: 02016709.4
(22) Anmeldetag: 26.07.2002
(51) Int. Cl.: B62M 1/04

(54) **Durch Tretbewegung angetriebenes Fahrzeug**

(30) Priorität: 01.08.2001 DE 10138666; 01.08.2001 DE 20113082 U
(71) Anmelder: Wohlgemuth, Horst Johannes, 66299 Friedrichsthal (DE)
(72) Erfinder: Wohlgemuth, Horst Johannes, 66299 Friedrichsthal (DE)

(57) **Zusammenfassung**

Entgegen einem herkömlichen Fahrrad wird bei dieser Erfindung erreicht,daß durch die langen Hebel welche abwechselnd nieder= getreten werden können und über die Flaschenzüge das Hinterrad antreiben,eine fast gradlinige Kraftübertragung möglich wird. Es ist möglich auf diese Weise, in jeder Winkelstellung der Trethebel das ganze Körpergewicht zum Einsatz zu bringen und somit die höchst mögliche Leistung auf das angetriebene Rad zu übertragen.

## Beschreibung

Die Erfindung betrifft ein durch Tretbewegung angetriebenes Fahrzeug mit einem Rahmen und mindestens zwei Rädern, von denen ein Rad lenkbar und ein Rad mittels eines Tretantriebes angetrieben wird, dessen Schwenkbewegung in eine Drehbewegung des angetriebenen Rades umgesetzt wird.

Aus der DE-OS-4343723 ist bereits ein Tretmobil der eingangs bekannten Art bekannt, bei dem auf einer Standfläche für den Fahrer ein zweiarmiger Wipphebel gelagert ist, dessen Hebelarme vom Fahrer abwechselnd niedergetreten werden. Dabei wird das Tretmobil über ein mit den Enden der Hebelarme verbundenes Antriebsseil, welches mit der Nabe des am angetriebenen Rades befindlichen Freilauf verbunden ist, angetrieben .

Dabei wird als nachteilig empfunden, daß der mit einem Bein seitlich auf der Standfläche stehende Fahrer das andere Bein abwechselnd auf eine der beiden Hebelarme des Wipphebels stellen muß, um diese niederzutreten. Weitere Nachteile des bekannten Tretmobils bestehen im hohen körperlichen Aufwand, sowie das Fehlen eines Übersetzungsgetriebes zwischen dem Wipphebel und dem angetriebenen Rad, wodurch pro Hub nur eine kleine Antriebsstrecke durchfahren werden kann und nur geringe Geschwindigkeiten zuläßt.

Außerdem wurde ein Wipproller mit Tretantrieb bekannt, welcher mit einer Wippe versehen ist, die an einer Seite mittels eines Schwenkgelenkes auf der Standfläche gelagert ist.
Der Nachteil dieses Antriebs liegt darin, daß zum Fortbewegen des Tretmobils ein sehr hoher Kraftaufwand durch die Beinmuskeln erforderlich ist.

Aus der DE-OS-196 02 343 sind bereits weitere Tretmobile der eingangs bekannten Art bekannt, bei denen der Fahrer auf einer als Standfläche ausgebildeten zweiarmigen Wippe steht, welches im vorderen Bereich am unteren horizontalen Rahmenteil gelagert und im hinteren Bereich über ein Übersetzungsgetriebe mit dem angetriebenen Hinterrad durch ein Traktionsmittel verbunden ist und das Tretmobil antreibt in dem der Fahrer sein Körpergewicht abwechselnd, von hinten nach vorne, verlagert. Der Nachteil dieses Antriebes liegt darin, daß das Körpergewicht des auf dem Tretmobil stehenden Fahrers, durch die Gewichtsverlagerung von hinten nach vorne, nicht kontinuierlich genutzt werden kann. Als weiteren Nachteil wird gesehen, daß durch Art der Kraftübertragung, das Körpergewicht des Fahrers nicht ausreichend genutzt wird.

Aus der DE 198 52 153 A1 ist ein weiteres Tretmobil der eingangs bekannten Art bekannt, bei dem der auf zwei Wippen stehende Fahrer durch abwechselndes Treten der Wippen, ein Kettengetriebe antreibt und dieses dann durch höhere Übersetzung das Hinterrad antreibt. Der Nachteil dieses Antriebes liegt darin, daß das Kettengetriebe immer mitdreht und da dieses Kettengetriebe unter den Wippen liegt, das ganze Tretmobil zu hoch aufbaut. Dadurch können Balanceschwierigkeiten auftreten, da die Wippen über der Drehachse des Vorder- und Hinterrades liegen. Ein weiterer Nachteil ist das Fehlen eines Sitzes, der dem Fahrer die Möglichkeit gewährt, sich bei Talfahrten auszuruhen.

Der vorliegenden Erfindung liegt die Aufgabe zugrunde, ein durch Tretbewegung angetriebenes Fahrzeug der einleitend genannten Art dahingehend zu verbessern,dass es leicht zu bedienen ist und das Körpergewicht des auf dem Fahrzeug stehenden Fahrers, in vollen Umfang und kontinuierlich zu nutzen. Außerdem soll eine hohe Fahrgeschwindigkeit und Verkehrssicherheit erreicht werden.

Diese Aufgabe wird erfindungsgemäß dadurch gelöst, dass die Kraftübertragung durch abwechselndes Auf- und Niedertreten der Trethebel, von den Trethebeln zum Rad, oder den Rädern, mittels Fahrradketten über Flaschenzüge erfolgt.

Die mit der Erfindung erzielten Vorteile bestehen insbesondere darin, dass der Fahrer zum Antreiben des Fahrzeuges, die beiden als Standflächen ausgebildeten Trethebel, abwechselnd aber auch voneinander unabhängig niedertreten kann. Durch den Einsatz des umgekehrten Flaschenzugprinzips, wobei die Lastrolle am kurzen Arm des Trethebels befestigt ist, bekommt die Antriebskette, die über einen Freilauf am angetriebenen Rad läuft, eine sehr hohe Geschwindigkeit und somit auch das Fahrzeug.

Da erfindungsgemäß der Antrieb wenig Reibung aufweist, weil alle Ritzel mit abgedichteten Kugellagern versehen sind, wird eine höhere Geschwindigkeit als bei herkömmlichen Fahrrädern erreicht. Dies erklärt sich dadurch, dass kein oberer und unterer Totpunkt wie beim Fahrrad entsteht, sondern durch den langen Hebelarm eine fast gradlinige Bewegung in eine Drehbewegung umgesetzt wird.

Um eine gute Hebelbewegung der Tretantriebe zu erzielen, sieht die Erfindung vor, dass die Tretantriebe aus jeweils einem langen und einem kurzen Hebelarm bestehen, wobei der lange Hebelarm als Trethebel und Standfläche für je einen Fuß genutzt wird.

Erfindungsgemäß ist das angetriebene Rad mit zwei Freiläufen versehen, einem Linken und Rechten, die jeweils vom linken oder rechten Tretantrieb betätigt werden.

Eine weitere Ausgestaltung der Erfindung sieht vor, dass man alle Raddurchmesser, wie bei der Fahrradherstellung, verwenden kann und somit die Herstellungskosten sehr niedrig halten kann. Der Rahmen mit der Vordergabel muss den jeweiligen Raddurchmessern angepasst werden.

Eine weitere Ausgestaltung der Erfindung sieht vor, dass je nach Raddurchmesser Ein-, Zwei-, Drei- oder Vierfach-Flaschenzugprinzip verwendet wird. Wobei bei einem kleinen Raddurchmesser ein Vierfaches-, bei einem mittleren Raddurchmesser ein Dreifaches- und bei großen Raddurchmessern ein Zweifaches-Flaschenzugprinzip verwendet wird.

Eine weitere bevorzugte Ausgestaltung der Erfindung sieht vor, dass die auf der Nabe des angetriebenen Rades befestigten Freiläufe (rechts und links) auch mit Kettenschaltung versehen werden können. Was bei Steigungsfahrten von Vorteil ist.

Eine weitere Ausgestaltung der Erfindung sieht vor, dass die Traverse, welche gabelförmig gefertigt ist, das Hinterrad zu einemTeil umschließt, so dass die Drehachsen für die Trethebel rechts und links recht weit nach hinten verlagert werden können, um eine größere Länge der Trethebel zu erreichen, so dass der Fahrer, auch wenn er auf dem Sattel sitzt noch ein beträchtlich größeres Drehmoment auf das angetriebene Rad bringen kann, als beim normalen Fahrrad.

Eine weitere Ausgestaltung der Erfindung sieht vor, dass die Zugfeder, welche die Kette und Trethebel in die ursprüngliche Lage zurückholt, in einem leichten Rohr befestigt ist und somit die Zugfeder und Kette nicht nur vor dem Durchhängen schützt, sondern auch vor Schmutz und Staub.

Eine weitere bevorzugte Ausgestaltung der Erfindung sieht vor, einen leichten Kettenschutz sowohl auf der linken wie auf der rechten Seite im hinteren Antriebsbereich über den kurzen Hebeln zu montieren, um Unfallgefahren auszuschließen.

Um das durch Tretbewegung angetriebene Fahrzeug erfindungsgemäß auch verkehrssicher zu machen, ist es mit Felgenbremsen am Vorderrad, sowie am Antriebsrad ausgerüstet. Auch eine Leuchtanlage wie Rückstrahler, Reflektoren und eine Klingel fehlen nicht.
Fig. 1 rechte Seitenansicht des erfindungsgemäßen durch Tretbewegung angetriebenen Fahrzeuges.
Fig. 2 linke Seitenansicht des erfindungsgemäßen durch Tretbewegung angetriebenen Fahrzeuges.
Fig. 3 Darstellung eines zweifach Flaschenzugantriebes
Fig. 4 Darstellung eines dreifach Flaschenzugantriebes
Fig. 5 Darstellung eines vierfach Flaschenzugantriebes

In allen fünf Figuren bedeuten gleiche Bezugszeichen jeweils die gleichen Einzelheiten.

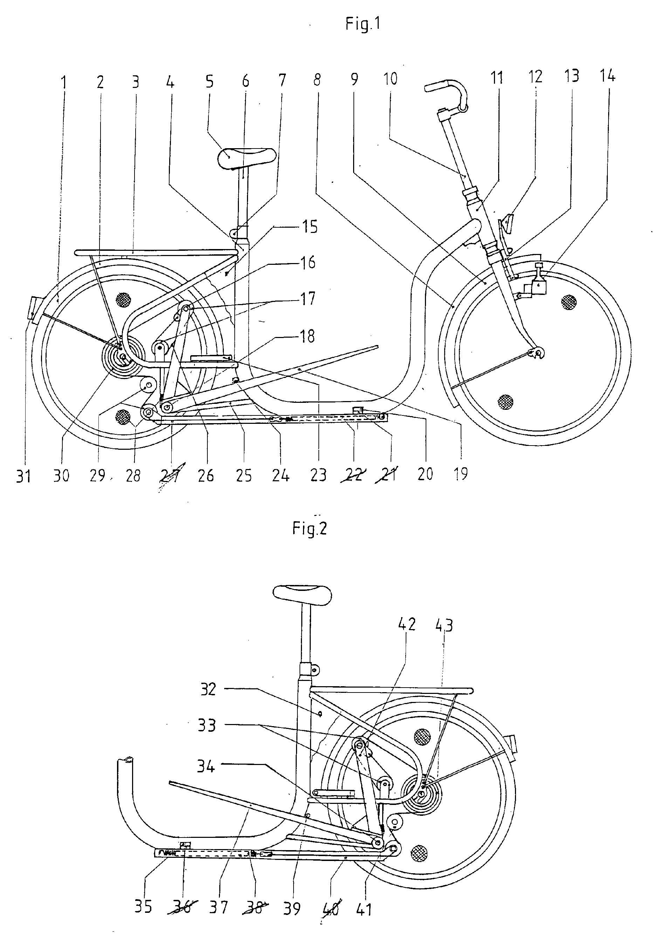

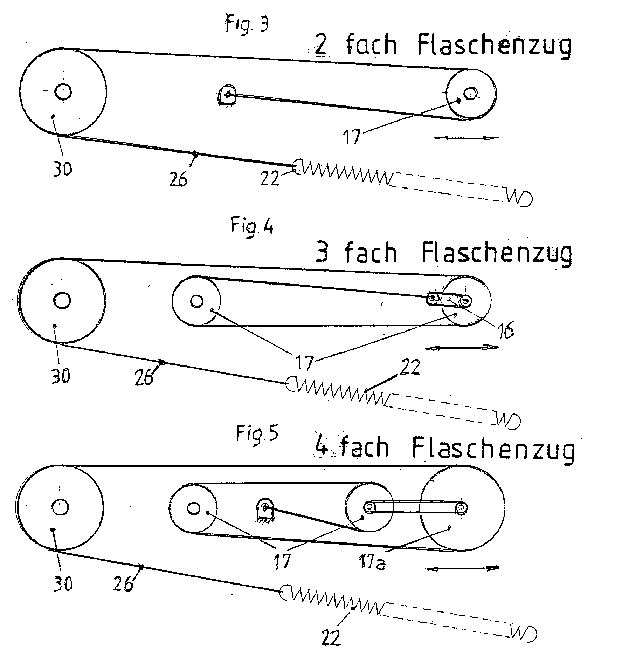

Das in der Fig. 1 dargestellte durch Tretbewegung angetriebene Fahrzeug besteht im wesentlichen aus einem Fahrzeugrahmen 4, welcher sich im wesentlichen aus den Rahmenteilen Traverse 25 mit Drehachse rechts 18, Drehachse links 34, dem Hinterbau in dem das angetriebene Rad 1 befestigt ist, den Steuerkopf 11, in dem die Gabel mit Lenker 10 gelagert ist und zur Aufnahme des lenkbaren Vorderrades 9 dient, sowie einem Tretantrieb 19 rechts an dessen kurzem Hebelarm ein Umlenkritzel 17 und das Ende der Kette 26 befestigt ist.
Das zweite Umlenkritzel 17 ist mit einer Lasche fest mit dem rechten Hinterbau des Rahmens verbunden. Die Antriebskette 26 wird mittels der Zugfeder 22 über einen Freilauf mit Stufenritzel 30 und Kettenschaltung 29 in das Schutzrohr 27 gezogen, und bildet somit nach Fig.4 einen dreifach Flaschenzug, bei dem die Lastrolle (Umlenkritzel 17) am kurzen Hebel 16 befestigt ist.
So wie einem Tretantrieb 37 links an dessen kurzem Hebelarm ein Umlenkritzel 33 und das Ende der Kette 26 befestigt ist.
Das zweite Umlenkritzel 33 ist mit einer Lasche fest mit dem linken Hinterbau des Rahmens verbunden. Die Antriebskette 26 wird mittels der Zugfeder 38 über einen Freilauf mit Stufenritzel 43 und Kettenschaltung 41 in das Schutzrohr 40 gezogen und bildet somit nach Fig.4 einen dreifach Flaschenzug, bei dem die Lastrolle (Umlenkritzel 33) am kurzen Hebel 42 befestigt ist.

Der Fahrzeugrahmen 4 besteht im wesentlichen aus einem Rohrrahmen und kann aus geeigneten Materialien,wie Stahl und Chrom-Molybdän, aber auch aus leichten Baustoffen wie Aluminium, Carbon oder Titanium gefertigt sein.
Die Traverse 25, die als Support für die Drehachsen 18 und 34 gilt, ist so gefertigt, dass sie mit ihrer Gabel im hinteren Bereich das angetriebene Rad 1 noch um einen Teil umschließt. Dadurch ist es möglich die Drehachsen 18 und 34 so weit nach hinten zu legen, dass die Trethebel ihre größt mögliche Länge erhalten.
Die oberen Anschläge 24 und 39 sind so beschaffen, dass sie nach oben und unten verstellt werden können, um einen größeren oder kleineren Hub der Trethebel 19 und 37 zu ermöglichen. Die Schutzrohre 27 und 40 sind so an der Kettenschaltung befestigt, dass die Ketten 26 frei und ohne Widerstand von den Rückzugfedern 22und 38 in die Schutzrohre 21 und 40 zurückgezogen werden können. Dadurch, dass die Kettenschaltungen 29 und 41 unabhängig mit ihren Flaschenzugantrieben und Trethebeln 19 und 37 sind, ist es möglich, die verschiedenen Gangarten auf jeder Seite unterschiedlich und separat zu wählen. Die Nabe des Hinterrades weist auf der linken Seite ein Linksgewinde und auf der rechten Seite ein Rechtsgewinde zur Aufnahme der Stufenritzel und deren Freiläufe 30 und 43 auf. Dies ist erforderlich, da die Freiläufe in Antriebsrichtung blockieren und sich durch den Antrieb nicht lösen dürfen. Beim freien Rollen des Fahrzeuges oder beim Rückzug der Ketten 26 sind die Freiläufe frei und ohne Drehwiderstand. Je nach Bedarf können auch Freiläufe mit Einzelritzeln verwendet werden.
- 1: Hinterrad
- 2: Schutzblech
- 3: Gepäckträger
- 4: Fahrzeugrahmen
- 5: Sattel
- 6: Sattelstange höhenverstellbar
- 7: Feststellschraube
- 8: Vorderradschutzblech
- 9: Vorderrad
- 10: Lenker und Vorderradgabel
- 11: Steuerkopf mit Lagerung
- 12: Lampe
- 13: Felgenbremse vorne
- 14: Dynamo
- 15: Seitenschutz rechts
- 16: Kurzer Hebel mit Lasche zur Befestigung der Kette und Umlenkritzel rechts
- 17: Umlenkritzel des rechten Flaschenzuges
- 18: Drehachse rechts
- 19: Trethebel rechts
- 20: Unterer Anschlag für Trethebel rechts
- 21: Drehpunkt und Aufhängung für Schutzrohr rechts
- 22: Rückzugfeder rechts
- 23: Felgenbremse hinten
- 24: Oberer Anschlag für Trethebel rechts verstellbar
- 25: Traverse zur Aufnahme der Drehachse 18 rechts und der Drehachse 34 links
- 26: Fahrradkette
- 27: Schutzrohr rechts
- 28: Reflektoren
- 29: Kettenschaltung rechts
- 30: Stufenritzel mit Freilauf
- 31: Rückstrahler
- 32: Seitenschutz links
- 33: Umlenkritzel des linken Flaschenzuges
- 34: Drehachse links
- 35: Unterer Anschlag für Trethebel links
- 36: Drehpunkt und Aufhängung für Schutzrohr links
- 37: Trethebel links
- 38: Rückzugfeder links
- 39: Oberer Anschlag für Trethebel links verstellbar
- 40: Schutzrohr links
- 41: Kettenschaltung links
- 42: Kurzer Hebel mit Lasche zur Befestigung der Kette und Umlenkritzel links
- 43: Stufenritzel mit Freilauf

## Patentansprüche

1. Fahrzeug, insbesondere Fahrrad (Fig.1u.2) mit mindestens zwei Rädern und zwei nebeneinander parallel zum Fahrgestell liegenden Trethebeln, **dadurch gekennzeichnet, dass** die Kraftübertragung durch abwechselndes Auf- und Niedertreten der Trethebel, von den Trethebeln zum Rad oder den Rädern mittels Fahrradketten, über Flaschenzüge erfolgt.

2. Fahrzeug nach Anspruch 1 **dadurch gekennzeichnet, dass** die beiden Trethebel (19 u. 37 )zum Antreiben des Fahrzeuges (Fig. 1 u. 2 ) voneinander unabhängig niedergetreten werden können.

3. Fahrzeug nach Anspruch 1 und 2 **dadurch gekennzeichnet, dass** die Trethebel (19 u. 37 ) jeweils von den Drehachsen (18 u. 34) aus gesehen, aus jeweils einem langen Trethebel (19 u. 37 ) und einem kürzeren Hebel (16 u. 42) bestehen.

4. Fahrzeug nach Anspruch 1-3 **dadurch gekennzeichnet, dass** der jeweilig mit dem angetriebenen Rad (1) verbundene Hebelarm (16 u. 42) kürzer ist als der jeweilige andere Trethebel (19 u. 37).

5. Fahrzeug nach Anspruch 1-4 **dadurch gekennzeichnet, dass** die auf den jeweils langen Trethebel (19 u. 37) einwirkende Kraft auf die jeweils kurzen Hebelarme (16 u. 42) übertragen wird, wobei die einwirkende Kraft auf diese verstärkt wird.

6. Fahrzeug nach Anspruch 1-5 **dadurch gekennzeichnet, dass** die Trethebel (19 u. 37) jeweils die Standfläche für je einen Fuß aufweisen.

7. Fahrzeug nach Anspruch 1-6 **dadurch gekennzeichnet, dass** die Übersetzung mittels eines umgekehrten Flaschenzugprinzips vorgenommen wird.

8. Fahrzeug nach Anspruch 1-7 **dadurch gekennzeichnet, dass** nicht nur Einzelritzel-Freiläufe links und rechts auf dem angetriebenen Rad verwendet werden, sondern auch solche, mit Kettenschaltung (30 u. 43).

9. Fahrzeug nach Anspruch 1-8 **dadurch gekennzeichnet, dass** unterschiedliche Fahrzeugrahmengrößen 4 und unterschiedliche Raddurchmesser (1 u. 9) verwendet werden.

10. Fahrzeug nach Anspruch 1-9 **dadurch gekennzeichnet, dass** je nach Raddurchmesser auch ein unterschiedliches Flaschenzugprinzip (Fig. 3-5) verwendet wird.

11. Fahrzeug nach Anspruch 1-10 **dadurch gekennzeichnet, dass** die Antriebsketten 26 jeweils mittels einer Zugfeder (22 u. 38) in die Schutzrohre (27 u. 40) gezogen wird und gleichzeitig die Trethebel (19 u. 37) in ihre Ausgangslage zurückgebracht werden.

12. Fahrzeug nach Anspruch 1-11 **dadurch gekennzeichnet, dass** die Schutzrohre (27 u. 40) bei Verwendung von Kettenschaltungen (30 u. 43) mit diesen an einem Ende verbunden sind und über die Drehpunkte (21 u. 36) frei mitschwingen können.

13. Fahrzeug nach Anspruch 1-12 **dadurch gekennzeichnet, dass** die Trethebel (19u.37) nach unten die Anschläge (20 u. 35) haben, wobei die oberen Anschläge (24 u. 39) verstellbar sind.

14. Fahrzeug nach Anspruch 1-13 **dadurch gekennzeichnet, dass** über den kurzen Hebelarmen (16 u.42) und deren Flaschenzügen (Fig. 3-5) am Fahrzeugrahmenhinterbau jeweils ein Schutz (15 u. 32) angebracht ist, um Unfallgefahren auszuschließen.

15. Fahrzeug nach Anspruch 1-14 **dadurch gekennzeichnet, dass** das Fahrzeug einen Sattel (5) besitzt, so dass der Fahrer sich bei Talfahrten ausruhen kann.
